# EUROPÄISCHE PATENTANMELDUNG

(11) **EP 3 428 994 A1**
(43) Veröffentlichungstag der Anmeldung: **16.01.2019**
(21) Anmeldenummer: 18000594.4
(22) Anmeldetag: 11.07.2018
(51) Int. Cl.: H01M 2/10, H01M 2/20, H01M 10/42

(54) **VORRICHTUNG ZUM HALTEN VON ELEKTRISCH LEITEND VERBUNDENEN BAUELEMENTEN, EINE VERWENDUNG UND VERFAHREN ZUR HERSTELLUNG EINER VORRICHTUNG ZUM HALTEN VON ELEKTRISCH LEITEND VERBUNDENEN BAUELEMENTEN**

(30) Priorität: 11.07.2017 DE 102017007035; 11.07.2017 DE 102017006518
(71) Anmelder: BMZ GmbH, 63791 Karlstein am Main (DE)
(72) Erfinder: Bauer, Sven, D-63791 Karlstein (DE)
(74) Vertreter: Nitz, Astrid

(57) **Zusammenfassung**

Vorrichtung zum Halten von elektrisch leitend verbundenen Bauelementen eines Packs von Batterieelementen, insbesondere Akkumulatorzellen, insbesondere Lithium-Ionen-Akkumulatoren, insbesondere für Powertoolgeräte und/oder Gartengeräte, die insbesondere mit einem Batteriemanagementsystem ausgestattet sind, wobei die Vorrichtung zum Energiespeichern und/oder Energieabgeben vorgesehen ist, die mehrfach aufladbar ist, umfassend mindestens einen Zellträger zum Aufnehmen der Batterieelemente, insbesondere Akkumulatorzelle, und/oder des Batteriemanagementsystems, mindestens ein elektrisch leitendes Verbindungsmittel, insbesondere umfassend ein oder mehrere elektrisch leitende Bandmittel und/oder Plattenmittel, zur elektrisch leitenden Verbindung zwischen zumindest zwei Bauelementen, insbesondere einer oder mehrerer Akkumulatorzellen und/oder dem Batteriemanagementsystem, wobei das leitende Verbindungsmittel an dem Zellträger derart abgestützt befestigt ist, dass eine Biegefestigkeit des Verbindungsmittels erreicht ist, wobei die Batterieelemente, insbesondere Akkumulatorzellen, unabhängig davon einzusetzen sind, insbesondere vorab und/oder anschließend, und eine anschließende Verbindungskontaktierung von Polen der Akkumulatorzellen am leitenden Verbindungsmittel vorzunehmen ist, insbesondere mittels Ultraschallverbinden und/oder Thermokompressionsverbinden und/oder Laserverbinden.

## Beschreibung

Die Erfindung betrifft eine Vorrichtung zum Halten von elektrisch leitend verbundenen Bauelementen eines Packs von Batterieelementen nach dem Oberbegriff von Anspruch 1, eine Verwendung nach dem Oberbegriff von Anspruch 5 und ein Verfahren zur Herstellung einer Vorrichtung zum Halten von elektrisch leitend verbundenen Bauelementen eines Packs von Batterieelementen nach dem Oberbegriff von Anspruch 6.

Bekannt sind Vorrichtungen zum Halten und/oder Transportieren von elektrisch leitend verbundenen Bauelementen eines Packs von Batterieelementen, wobei die leitenden Verbindungen direkt mittels Verbindungsverfahren, insbesondere Ultraschallschweißen, auf die Pole der Batterieelemente aufgebracht werden.

Nachteilig ist es dabei, dass es bei einer üblichen Aufbringung der Kontaktierungen durch die mechanischen und thermischen Belastungen beim Anbringen der Verbindungen aufgrund von Wärme- und/oder mechanischem Einfluss zu Wölbungen der Verbindungsmittel und zu Beschädigungen und losgelösten elektrischen Kontakten kommen kann.

Aufgabe der vorliegenden Erfindung ist es daher, eine Vorrichtung zum Halten von elektrisch leitend verbundenen Bauelementen eines Packs von Batterieelementen bereitzustellen, die einfach und sicher zu handhaben ist.

Die Aufgabe wird gelöst durch eine Vorrichtung zum Halten von elektrisch leitend verbundenen Bauelementen eines Packs von Batterieelementen, insbesondere Akkumulatorzellen, insbesondere Lithium-Ionen-Akkumulatoren, insbesondere für Powertoolgeräte und/oder Gartengeräte, die insbesondere mit einem Batteriemanagementsystem ausgestattet sind, wobei die Vorrichtung zum Energiespeichern und/oder Energieabgeben vorgesehen ist, die mehrfach aufladbar ist, umfassend mindestens einen Zellträger zum Aufnehmen der Batterieelemente, insbesondere Akkumulatorzellen, und/oder des Batteriemanagementsystems, mindestens ein elektrisch leitendes Verbindungsmittel, insbesondere umfassend ein oder mehrere elektrisch leitende Bandmittel und/oder Plattenmittel, zur elektrisch leitenden Verbindung zwischen zumindest zwei Bauelementen, insbesondere einer oder mehrerer Akkumulatorzellen und/oder dem Batteriemanagementsystem, wobei das leitende Verbindungsmittel an dem Zellträger derart abgestützt befestigt ist, dass eine Biegefestigkeit des Verbindungsmittel erreicht ist, wobei die Batterieelemente, insbesondere Akkumulatorzellen, unabhängig davon einzusetzen sind, insbesondere vorab und/oder anschließend, und eine anschließende Verbindungskontaktierung von Polen der Akkumulatorzellen am leitenden Verbindungsmittel vorzunehmen ist, insbesondere mittels Ultraschallverbinden und/oder Thermokompressionsverbinden und/oder Laserverbinden.

Die vorliegende Erfindung liefert eine sichere und stabile Vorrichtung mit einem Verbindungsmittel und Bauelementen eines Packs. Dadurch dass die metallischen Verbindungelemente mit dem Zellträger fest verbunden werden, bevor der Zellträger mit Zellen bestückt wird, ist eine exakte Ausrichtung der leitenden Verbindungelemente und die sichere Kontaktierungen auf die Zellpole vereinfacht und die Verformung der metallischen Verbindungelemente nach jedem Schweißprozess verhindert. In den bekannten Energiespeichermodulen wird das metallische Verbindungselement erst beim ersten Schweißvorgang fest mit der Akkumulatorzelle und dem Energiespeichermodul verbunden. Das bekannte metallische Verbindungselement hat dabei eine Stärke von weniger als einem Millimeter und ist entsprechend mechanisch instabil bzw. elastisch verformbar. In der erfindungsgemäßen Ausführungsform ist das metallische Verbindungelement sehr exakt auf dem Zellpol zu positionieren. Zudem wird die kleine Fläche des Zellpols exakt getroffen und, vorbestimmte Regionen, die nicht geschweißt oder mechanisch belastet werden dürfen, um die Zell nicht zu beschädigen, werden auf reproduzierbare Weise ausgespart, da die Erfindung eine hohe Positionierungsgenauigkeit des metallischen Verbindungelements ermöglicht.

Zudem kann sich das metallische Verbindungelement beim Schweißen und Erwärmen nicht mehr verformen da kein starkes Aufdrücken des metallischen Verbindungelements auf den Zellpol vor jedem Schweißvorgang mehr notwendig ist, das in bekannten Vorrichtungen zu einer elastischen oder plastischen Verformung des metallischen Verbindungelements führt. Zudem kann die starke Erhitzung des Schweißbereichs und die darauffolgende schnelle Abkühlung nicht mehr zu einer Verschiebung durch mechanischen Spannungen und entsprechendem Verzug führen. Dies ist besonders bei schmalen und langen metallischen Verbindungelementen vorteilhaft, so wie sie in aktuellen großen Batteriesystemen benötigt werden. Durch diese vermiedenen Verformung werden weiterhin die nachfolgenden Schweißvorgänge am gleichen Verbindungselement erleichtert.

Die Vorrichtung zum Halten kann auch zum sicheren Transport oder Einsatz in bewegten Geräten verwendet werden, da ein guter Halt und zugleich zuverlässige elektrische Verbindung der Bauelemente gewährleistet ist. Vorteilhaft wird ein elektrisch leitendes, plattenförmiges Verbindungselement großflächig verwendet, dass sich durch die vorgesehene, erfindungsgemäße Kontaktierung nicht aufwölbt oder unsichere Kontakte mit sich bringt. Mit dem Zellhalter fest verbundene Zellverbinder, insbesondere an mehreren Positionen, insbesondere an Seiten des Zellträgers befestigt,

Vorteilhaft ist es, wenn jeweils ein Zellträger an einem oberen Endbereich und einem unteren Endbereich vorgesehen sind und jeweils zumindest ein leitende Verbindungsmittel an dem Zellträger abgestützt befestigt ist.

Vorteilhaft ist es, wenn das leitende Verbindungsmittel an dem Zellträger an mehreren Verbindungspositionen zu befestigen ist, insbesondere an Mittelstreben des Zellträgers.

Vorteilhaft ist es, wenn die Batterieelemente durch Positionierungselemente untereinander auf vorbestimmten Positionen im Zellträger zu halten sind, wobei die Verbindungspositionen am leitenden, plattenartigen Verbindungsmittel an dem Zellträger insbesondere an Positionierungserhöhungen zwischen Aufnahmevertiefungen für Batterieelemente vorgesehen sind.

Vorteilhaft ist es, wenn eine positionierende Abstützung, insbesondere Umgreifung des leitenden Verbindungsmittels an zumindest einem Randbereich des Zellträgers vorgesehen ist.

Vorteilhaft ist es, wenn das leitende Verbindungsmittel an dem Zellträger mittels Verschraubung und/oder Heißverstämmen und/oder Klipverbindung und/oder Blindniet zu befestigen ist.

Vorteilhaft ist es, wenn ein Pack umfassend mehrere Akkumulatorzellen umfassend Verbindungsmittel, als Gesamtheit ein Abstandsmittel, insbesondere außen oder im Inneren, insbesondere als Gehäusemittel, zum Abstandshalten zu einem weiteren oberen und/oder unteren Pack aufweist.

Vorteilhaft ist es, wenn die Verbindungsmittel gegen eine mechanische Belastung durch ein Sicherungsmittel gesichert sind.

Vorteilhaft ist es, wenn mindestens ein elektrisch leitendes Verbindungsmittel vorgesehen ist, insbesondere umfassend ein oder mehrere Verbindungsdrähte und/oder Verbindungsbänder und/oder Verbindungsplatten, das mittels eines Verbindungsverfahrens, insbesondere mittels Ultraschallbonden und/oder Thermokompressionsbonden und/oder Laserverbinden, zur leitenden Verbindung, zwischen zumindest zwei Bauelementen, insbesondere einer oder mehrerer Akkumulatorzellen und/oder dem Batteriemanagementsystem zu verbinden ist, mindestens einen Zellträger zum Aufnehmen der Batterieelemente, insbesondere Akkumulatorzellen, und/oder des Batteriemanagementsystems, wobei die Batterielemente insbesondere in Längsrichtung nebeneinander in dem Zellträger angeordnet eingerichtet sind, wobei die Batterieelemente zwischen einem Zellträger in einem oberen Bereich des Packs und einem Zellträger in einem unteren Bereich des Packs angeordnet sind, insbesondere zumindest angrenzend an einen unteren Randbereich des Packs, wobei ein Beabstandungsmittel zum Abstandshalten zu einem weiteren, in einem oberen Bereich aufzusetzenden Zusatzelement, insbesondere ein weiterer Pack, vorgesehen ist, wodurch ein vorbestimmter Abstand zwischen dem unteren Randbereich des Packs und einem oberen Randbereich des Packs einzurichten ist, wobei der Abstand gleich oder grösser als eine größte Länge eines Batterieelements, insbesondere Akkumultorzelle, in dem Zellträger eingerichtet ist.

Die Ausführung liefert eine geschützte und klar definierte Vorrichtung mit Bauelementen eines Packs. Somit ist durch die Erfindung ein Halterungssystem mit zuverlässigem Toleranzausgleich für elektrischen Energiespeicher gegeben. Es lassen sich auf sichere Weise auch Zellen von unterschiedlichen Fertigungschargen einsetzen, die beispielsweise leicht abweichende Längen aufweisen und trotzdem ist eine sichere elektrische Kontaktierung der Zellen gewährleistet, auch bei einer variablen Höhe für das Batteriesystem, was die mechanische Befestigung des Batteriesystems in ein Gehäuse oder in der Anwendung ermöglicht Die Vorrichtung zum Halten kann auch zum sicheren Transport oder Einsatz in bewegten Geräten verwendet werden, da ein zuverlässige Dimensionierung und zugleich geschützte elektrische Verbindung der Bauelemente gewährleistet ist. Insbesondere ist durch die Haltevorrichtung für eine vertikale Anordnung der Akkupacks in axialer Richtung der Akkuzellen eine konstante Höhe für die einzelnen Akkupacks gewährleistet, so dass die externen Dimensionen jedes Akkupacks unabhängig der eingesetzten Zellen konstant bleiben. Gleichzeitig ermöglicht die Haltevorrichtung einen Ausgleich der unterschiedlichen Längen der eingesetzten Zellen, so dass die gleiche Haltevorrichtung für Zellen unterschiedlicher Hersteller und Fertigungschargen eingesetzt werden können. Ebenfalls ist je nach Einrichtung auch ein Ausgleich von Höhe von Zellen + Batteriezellträger + Zellverbinder + sonstige Komponenten für die mechanische Fixierung der Zellen, die elektrische Kontaktierung, Sensorik usw. möglich. Die Gesamthöhe des Batteriesystems wird von dem Beabstandungsmittel vorgegeben und konstant unabhängig der eingesetzten Zellen ist. Durch die Erfindung ist eine gute Stapelbarkeit der Akkupacks mit einer definierten Höhe gegeben.

Vorteilhaft ist es, wenn das Beabstandungsmittel in einem Außenbereich und/oder einem Innenbereich des Packs vorgesehen ist.

Vorteilhaft ist es, wenn das Beabstandungsmittel als Gehäusemittel, insbesondere als Gehäuseteilmittel, ausgebildet ist.

Vorteilhaft ist es, wenn der durch das Beabstandungsmittel erzeugte Abstand gleich oder größer als eine Länge eines Batterieelements und des Zellträgers und des darauf angeordneten Verbindungsmittels, sowie insbesondere weiterer Mittel für die mechanische Fixierung der Batterieelemente und/oder eine elektrische Kontaktierung und/oder ein Sensorikmittel.

Vorteilhaft ist es, wenn die Batterielelemente zuerst zwischen den Zellträgem und anschließend in dem Gehäusemittel als Beabstandungsmittel anzuordnen sind

Vorteilhaft ist es, wenn der Zellträger mit den Batterieelementen gegen ein Verrutschen an dem Beabstandungsmittel gesichert ist

Vorteilhaft ist es, wenn Batterieelemente mit einem Zellverbindungsmittel leitend verbunden sind, wobei ein Verbindungsmittel an dem Zellträger angebracht ist und anschließend die Batterieelemente mit dem Verbindungsmittel zu verbinden sind.

Vorteilhaft ist es, wenn das Beabstandungsmittel zugleich als Stabilisierungsmittel des Packs ausgebildet ist.

Die Vorrichtung zum Halten kann auch zum sicheren Transport oder Einsatz in bewegten Geräten verwendet werden, da ein guter Halt und zugleich zuverlässige elektrische Verbindung der Bauelemente gewährleistet ist. Vorteilhaft wird ein elektrisch leitendes, plattenförmiges Verbindungselement großflächig verwendet, dass sich durch die vorgesehene, erfindungsgemäße Kontaktierung nicht aufwölbt oder unsichere Kontakte mit sich bringt. Mit dem Zellhalter fest verbundene Zellverbinder, insbesondere an mehreren Positionen, insbesondere an Seiten des Zellträgers befestigt,

Die Aufgabe wird ebenfalls gelöst durch eine Verwendung einer Vorrichtung nach einem der Ansprüche 1 bis 4, für Paks umfassend Akkumulatorenzellen für Leicht-Elektro Fahrzeuge (LEV), insbesondere Elektrofahrräder.

Die Aufgabe wird ebenfalls gelöst durch ein Verfahren zur Herstellung einer Vorrichtung zum Halten von elektrisch leitend verbundenen Bauelementen eines Packs von Batterieelementen, insbesondere Akkumulatorzellen, insbesondere Lithium-Ionen-Akkumulatoren, insbesondere für insbesondere für Powertoolgeräte und/oder Gartengeräte, die insbesondere mit einem Batteriemanagementsystem ausgestattet sind, nach Anspruch 1 bis 4, wobei die Vorrichtung zum Energiespeichern und/oder Energieabgeben vorgesehen ist, die mehrfach aufladbar ist, umfassend mindestens einen Zellträger zum Aufnehmen der Batterieelemente, insbesondere Akkumulatorzellen, und/oder des Batteriemanagementsystems, wobei mindestens ein elektrisch leitendes Verbindungsmittel, insbesondere umfassend ein oder mehrere leitende Bandmittel und/oder Plattenmittel, mittels einer Verbindungskontaktierung, insbesondere mittels Ultraschallverbinden und/oder Thermokompressionsverbinden und/oder Laserverbinden, zur leitenden Verbindung zwischen zumindest zwei Bauelementen vorgesehen ist, insbesondere einer oder mehrerer Akkumulatorzellen und/oder dem Batteriemanagementsystem, wobei zunächst das leitende Verbindungsmittel an dem Zellträger derart abgestützt befestigt wird, dass eine Biegefestigkei des Verbindungsmittel erreicht wird, wobei die Batterieelemente, insbesondere Akkumulatorzellen, unabhängig davon eingesetzt werden, insbesondere vorab und/oder anschließend, und eine anschließende Verbindungskontaktierung von Polen der Akkumulatorzellen am leitenden Verbindungsmittel vorgenommen wird.

Vorteilhaft ist es, wenn mindestens ein elektrisch leitendes Verbindungsmittel vorgesehen wird, insbesondere umfassend ein oder mehrere Verbindungsdrähte und/oder Verbindungsbänder und/oder Verbindungsplatten, das mittels eines Verbindungsverfahrens, insbesondere mittels Ultraschallbonden und/oder Thermokompressionsbonden und/oder Laserverbinden, zur leitenden Verbindung, zwischen zumindest zwei Bauelementen, insbesondere einer oder mehrerer Akkumulatorzellen und/oder dem Batteriemanagementsystem verbunden wird, mindestens einen Zellträger zum Aufnehmen der Batterieelemente, insbesondere Akkumulatorzellen, und/oder des Batteriemanagementsystems, wobei die Batterielemente insbesondere in Längsrichtung nebeneinander in dem Zellträger angeordnet eingerichtet wird, wobei die Batterieelemente zwischen einem Zellträger in einem oberen Bereich des Packs und einem Zellträger in einem unteren Bereich des Packs angeordnet wird, insbesondere zumindest angrenzend an einen unteren Randbereich des Packs, wobei ein Beabstandungsmittel zum Abstandshalten zu einem weiteren, in einem oberen Bereich aufzusetzenen Zusatzelement, insbesondere ein weiterer Pack, vorgesehen ist, wodurch ein vorbestimmter Abstand zwischen dem unteren Randbereich des Packs und einem oberen Randbereich des Packs einzurichten ist, wobei der Abstand gleich oder grösser als eine größte Länge eines Batterieelements in dem Zellträger eingerichtet wird.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigt:
- Fig. 1: erfindungsgemäße Vorrichtung zum Halten,
- Fig. 2a: Ausschnitt einer erfindungsgemäßen Vorrichtung,
- Fig. 2b: Ausschnitt einer erfindungsgemäßen Vorrichtung,
- Fig. 2c: Ausschnitt einer erfindungsgemäßen Vorrichtung,
- Fig. 2d: Ausschnitt einer erfindungsgemäßen Vorrichtung,

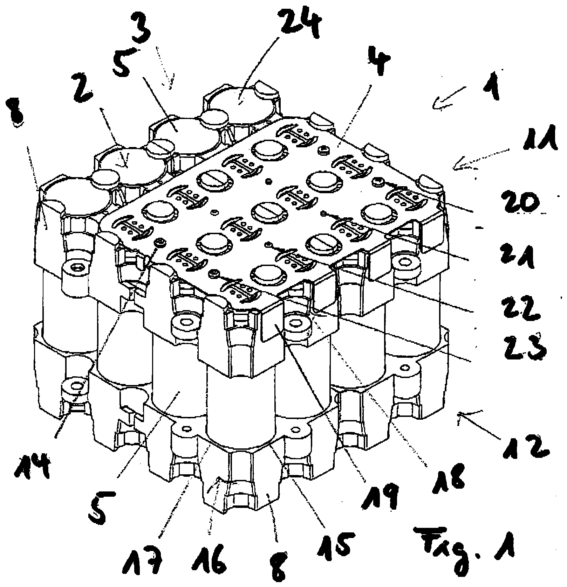

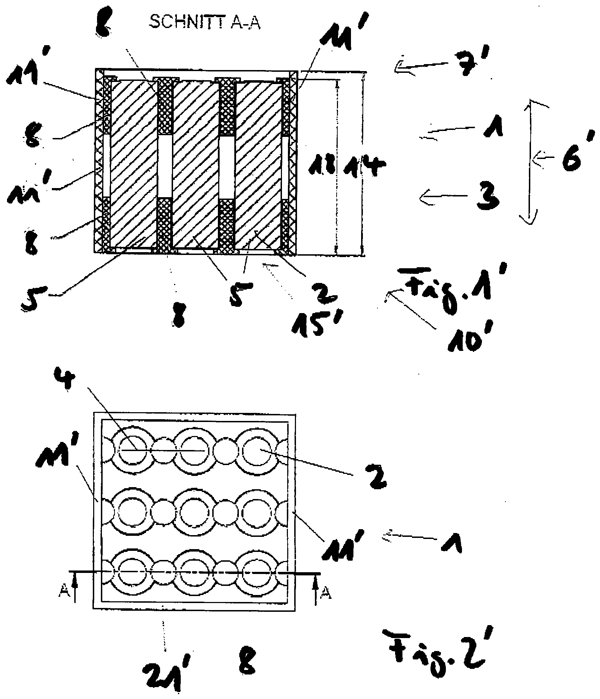

- Fig. 1': eine erfindungsgemäße Vorrichtung zum Halten in Seitenschnitt,

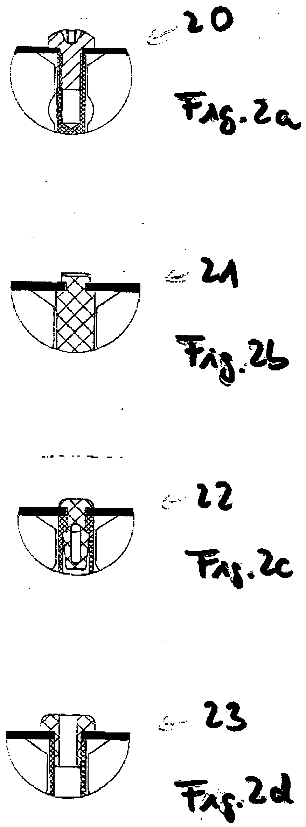

- Fig. 2': eine erfindungsgemäße Vorrichtung zum Halten in Aufsicht,

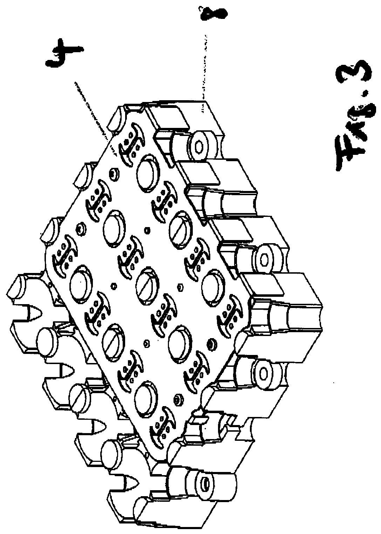

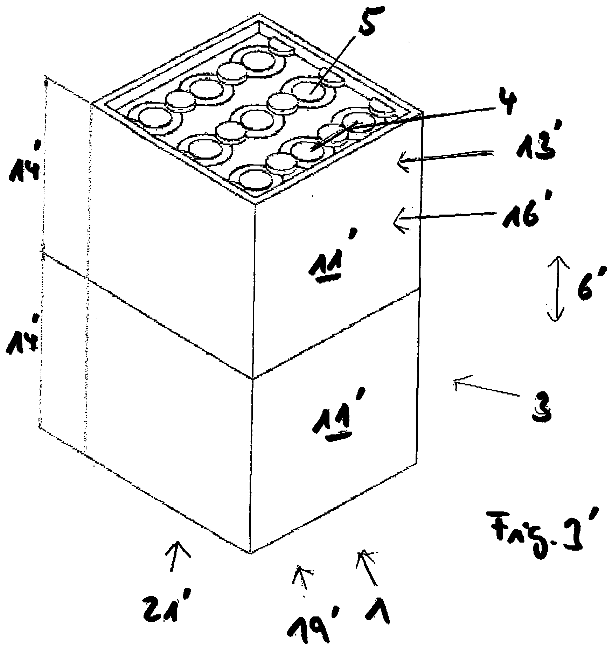

- Fig. 3': eine erfindungsgemäße Vorrichtung zum Halten und

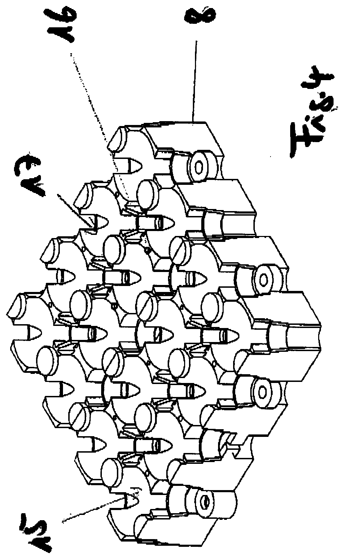

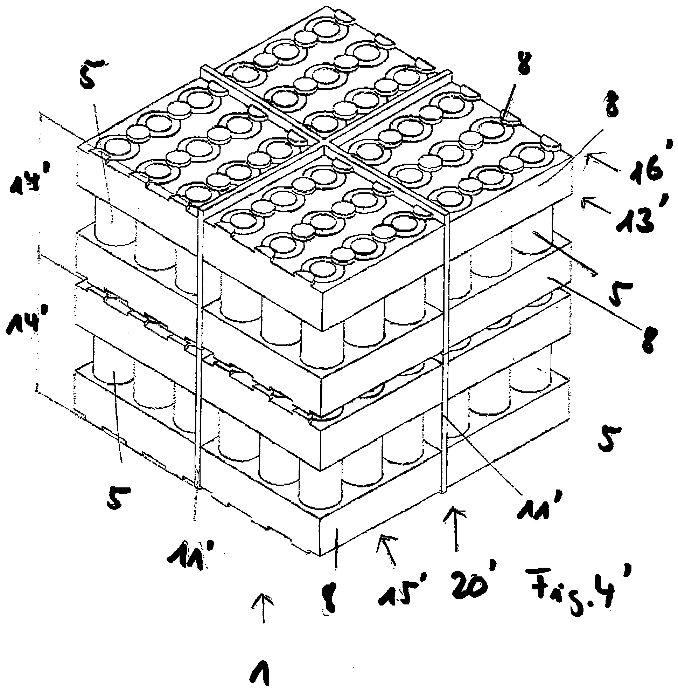

- Fig. 4': eine erfindungsgemäße Vorrichtung zum Halten.

Fig. 1 zeigt eine erfindungsgemäße Vorrichtung 1 zum Halten von elektrisch leitend verbundenen Bauelementen 2 eines Packs 3 von Batterieelementen, insbesondere Akkumulatorzellen 5, insbesondere Lithium-Ionen-Akkumulatoren, insbesondere für Powertoolgeräte und/oder Gartengeräte, die insbesondere mit einem Batteriemanagementsystem ausgestattet sind, wobei die Vorrichtung zum Energiespeichern und/oder Energieabgeben vorgesehen ist, die mehrfach aufladbar ist, umfassend mindestens einen Zellträger 8 zum Aufnehmen der Batterieelemente, insbesondere Akkumulatorzellen 5, und/oder des Batteriemanagementsystems, mindestens ein elektrisch leitendes Verbindungsmittel 4, insbesondere umfassend ein oder mehrere leitende Bandmittel und/oder Plattenmittel, das mittels einer Verbindungskontaktierung, insbesondere mittels Ultraschallverbinden und/oder Thermokompressionsverbinden und/oder Laserverbinden, zur leitenden Verbindung zwischen zumindest zwei Batterieelementen vorgesehen ist, insbesondere einer oder mehrerer Akkumulatorzellen 5 und/oder dem Batteriemanagementsystem, wobei das leitende Verbindungsmittel 4 an dem Zellträger derart abgestützt befestigt ist, dass eine Biegefestigkeit des Verbindungsmittel 4 erreicht ist, wobei die Batterieelemente, insbesondere Akkumulatorzellen 5, unabhängig von der Befestigung am Zellträger einzusetzen sind, insbesondere vorab und/oder anschließend, und eine anschließende Verbindungskontaktierung von Polen 24 der Akkumulatorzellen am leitenden Verbindungsmittel 4 vorzunehmen ist. Es ist beispielhaft ein Zellträger 8 an einem oberen Endbereich 11 und einem unteren Endbereich 12 vorgesehen. Zumindest ein leitendes Verbindungsmittel 4 ist an dem Zellträger 8 an einem oberen Endbereich 11 abgestützt befestigt und sorgt für die elektrische Verbindung zwischen zumindest zwei Zellen, die in Reihe oder parallel geschaltet sein können, , mit entsprechenden Kontaktabschnitten, die in Kontakt mit einer der Polflächen der zu verbindenden Zellen stehen und üblicherweise mit diesen Polflächen stofflich verbunden werden. Die Positionierungsgenauigkeit vom metallischen Verbindungselement auf dem Zellträger kann sehr hoch sein, was eine anschließende exakte Ausrichtung der Schweißstellen an die Zellpole ermöglicht.

Das an dem Zellträger erfindungsgemäß befestigte metallische Verbindungselement kann sich beim ersten Schweißvorgang mit den Zellpolen vorteilhaft nicht mehr nach oben verbiegen, so dass komplexe Niederhaltungsmechanismen sind nicht mehr notwendig sind. Für die Verbindung zwischen Akkuzelle bzw. Zellpol und dem metallischen Verbindungelement wird beispielsweise das Kontakt- oder Punktschweißverfahren eingesetzt. Dabei wird das metallische Verbindungelement auf durch einen nicht dargestellten Schweißkopf auf den Zellpol mit einer definierten Kraft gedrückt. Das metallische Verbindungelement weist - wie beispielhaft dargestellt - einen Schlitz auf, der durch den Kontakt mit dem Zellpol elektrisch überbrückt wird. Der Schweißkopf weist zwei Elektroden auf, die jeweils auf der einen und anderen Seite des Schlitzes aufliegen. Für das Schweißen wird ein hoher Strom durch die beiden Elektroden des Schweißkopfs geführt, der wegen der Überbrückung des Schlitzes durch das Zellpolblech getragen wird. Durch die Übergangswiderstände zwischen metallischem Verbindungelement und Zellpolblech wird dieser Bereich so stark erhitzt, dass das Metall der beiden Kontaktpartner schmilzt und diese somit zusammengelötet werden.

Das metallische Verbindungselement wird erfindungsgemäß an mehreren Stellen mit den Zellträgern fest verbunden, bevor der Zellträger mit Akkumulatorzellen bestückt wird, wobei verschiedene Verbindungsverfahren eingesetzt werden können, wie beispielhaft in Fig. 2a- 2d dargestellt.

Fig. 2a zeigt einen Ausschnitt einer erfindungsgemäßen Vorrichtung 1 zum Halten, beispielhaft eine Verschraubung 20,

Fig. 2b zeigt einen Ausschnitt einer erfindungsgemäßen Vorrichtung 1 zum Halten, beispielhaft Heißverstämmen 21.

Fig. 2c zeigt einen Ausschnitt einer erfindungsgemäßen Vorrichtung 1 zum Halten, beispielhaft Klippverbindung 22.

Fig. 2d zeigt einen Ausschnitt einer erfindungsgemäßen Vorrichtung 1 zum Halten, beispielhaft Blindniet 23.

Fig. 1' zeigt eine erfindungsgemäße Vorrichtung zum Halten in Seitenschnitt. Die Akkuzellen eines Akkupacks 3 werden in einer Haltevorrichtung, einem sogenannten Zellhalter, gehalten. Dabei sind zylindrisch ausgestaltete Akkuzellen eines Akkupacks häufig derart nebeneinander angeordnet, dass ihre Achsen parallel zueinander ausgerichtet sind. Auf diese Weise kann eine höhere Spannung erreicht werden, wenn die Akkuzellen in Reihe geschaltet sind. Bei einer Parallelschaltung der Akkuzellen lässt sich eine höhere Kapazität erzielen. Als elektrisches Verbindungsmittel 4 können beispielsweise Kabel, Nickelband, Verbinder mit Schweißwarzen oder Blechabschnitte eingesetzt werden. Dadurch sind die an den beiden Längsenden in axialer Richtung befindlichen elektrischen Kontakte einer jeden Akkuzelle gut zugänglich und lassen sich somit auf einfache Weise elektrisch miteinander verbinden. Es ist eine Vorrichtung 1 zum Halten von elektrisch leitend verbundenen Bauelementen 2 eines Packs 3 von Batterieelementen dargestellt, insbesondere Akkumulatorzellen 5, insbesondere Lithium-Ionen-Akkumulatoren, die insbesondere mit einem Batteriemanagementsystem ausgestattet sind, wobei die Vorrichtung zum Energiespeichern und/oder Energieabgeben vorgesehen ist, die mehrfach aufladbar ist, umfassend mindestens ein elektrisch leitendes Verbindungsmittel, insbesondere umfassend ein oder mehrere Verbindungsdrähte und/oder Verbindungsbänder und/oder Verbindungsplatten, das mittels eines Verbindungsverfahrens, insbesondere mittels Ultraschallbonden und/oder Thermokompressionsbonden und/oder Laserverbinden, zur leitenden Verbindung, zwischen zumindest zwei Bauelementen, insbesondere einer oder mehrerer Akkumulatorzellen 5 und/oder dem Batteriemanagementsystem zu verbinden ist, mindestens einen Zellträger 8 zum Aufnehmen der Batterieelemente, insbesondere Akkumulatorzellen 5, und/oder des Batteriemanagementsystems, wobei die Batterielemente insbesondere in Längsrichtung 6' nebeneinander in dem Zellträger 8 angeordnet eingerichtet sind, wobei die Batterieelemente zwischen einem Zellträger 8 in einem oberen Bereich 7' des Packs 3 und einem Zellträger in einem unteren Bereich 10' des Packs angeordnet sind, insbesondere zumindest angrenzend an einen unteren Randbereich 15' des Packs, wobei ein Beabstandungsmittel 11' zum Abstandshalten zu einem weiteren, in einem oberen Bereich 12' aufzusetzenden Zusatzelement 13', insbesondere ein weiterer Pack 16', beispielhaft dargestellt in Fig. 3' oder 4', vorgesehen ist, wodurch ein vorbestimmter Abstand 14' zwischen dem unteren Randbereich 15' des Packs und einem oberen Randbereich 17' des Packs einzurichten ist, wobei der Abstand 14' gleich oder grösser als eine größte Länge 18' eines Batterieelements, insbesondere Akkumulatorzelle 5, in dem Zellträger 8 eingerichtet ist.

Fig. 2' zeigt eine erfindungsgemäße Vorrichtung 1 zum Halten in Aufsicht mit einem Beabstandungsmittel 11' in Form eines Gehäusemittels 21'.

Fig. 3' zeigt eine erfindungsgemäße Vorrichtung 1 zum Halten, wobei zwei Packs 3, 13' übereinander angeordnet sind. Mehrere Akkupacks 3 mit elektrischen Energiespeichern können miteinander kombiniert werden, um ein Batteriesystem zu bilden. Dabei sind Akkupacks mit Akkumulatorzellen 5, deren elektrische Kontakte sich an ihren jeweiligen Längsenden in axialer Richtung 6' befinden, häufig in axialer Richtung übereinander angeordnet und ein Beabstandungsmittel 11' in einem Außenberteich 19' als Gehäusemittel 21' angeordnet. Auf dieser Weise lässt sich eine kompakte Form des Batteriesystems realisieren.

Fig. 4 zeigt eine erfindungsgemäße Vorrichtung 1 zum Halten. Bei einem Batteriesystem müssen nicht nur jeweils die Akkuzellen 5 eines Akkupacks 3 elektrisch miteinander verbunden werden, sondern auch die Akkuzellen eines Akkupacks mit denjenigen zumindest eines weiteren Akkupacks elektrisch verbunden werden. Sind die Akkupacks des Batteriesystems in axialer Richtung der Akkuzellen übereinander angeordnet, bedeutet dies, dass zusätzlich eine axiale Verschaltung zwischen den Akkupacks bzw. ihren jeweiligen Akkuzellen eingesetzt werden kann, auch bei variablen Lägen der Zellen. Es wird dargestellt, dass das Beabstandungsmittel 11' in einem

Außenbereich 19', wie in Fig. 3' beispielhaft dargestellt, und/oder einem Innenbereich 20' des Packs, wie in Fig. 4' beispielhaft dargestellt, vorgesehen ist.

### BEZUGSZEICHENLISTE

- 1: Vorrichtung zum Halten
- 2: Bauelement
- 3: Pack
- 4: Verbindungsmittel
- 5: Akkumulatorzelle
- 6: Bonddraht
- 8: Zellträger
- 11: oberer Endbereich
- 12: unterer Endbereich
- 13: Verbindungspositionierungen
- 14: Mittelstrebe
- 15: Positionierungselement
- 16: Positionierungserhöhungen
- 17: Aufnahmevertiefungen
- 18: Randbereich
- 19: Umgreifung
- 20: Verschraubung
- 21: Heißverstämmen
- 22: Klipverbindung
- 23: Blindniet
- 24: Pol
- 6': Längsrichtung
- 7': oberer Bereich
- 10': unterer Bereich
- 11': Beabstandungsmittel
- 12': oberer Bereich
- 13': Zusatzelement
- 14': Abstand
- 15': unterer Randbereich
- 16': Pack
- 17': oberer Randbereich
- 18': Länge
- 19': Aussenbereich
- 20': Innenbereich
- 21': Gehäusemittel

## Patentansprüche

1. Vorrichtung (1) zum Halten von elektrisch leitend verbundenen Bauelementen (2) eines Packs (3) von Batterieelementen, insbesondere Akkumulatorzellen (5), insbesondere Lithium-lonen-Akkumulatoren, insbesondere für Powertoolgeräte und/- oder Gartengeräte, die insbesondere mit einem Batteriemanagementsystem ausgestattet sind, wobei die Vorrichtung zum Energiespeichern und/oder Energieabgeben vorgesehen ist, die mehrfach aufladbar ist,
umfassend mindestens einen Zellträger (8) zum Aufnehmen der Batterieelemente, insbesondere Akkumulatorzellen (5), und/oder des Batteriemanagementsystems,
mindestens ein elektrisch leitendes Verbindungsmittel (4), insbesondere umfassend ein oder mehrere elektrisch leitende Bandmittel und/oder Plattenmittel, zur elektrisch leitenden Verbindung zwischen zumindest zwei Bauelementen, insbesondere einer oder mehrerer Akkumulatorzellen (5) und/oder dem Batteriemanagementsystem,
wobei das leitende Verbindungsmittel (4) an dem Zellträger derart abgestützt befestigt ist, dass eine Biegefestigkeit des Verbindungsmittels (4) erreicht ist, wobei die Batterieelemente, insbesondere Akkumulatorzellen (5), unabhängig davon einzusetzen sind, insbesondere vorab und/oder anschließend, und eine anschließende Verbindungskontaktierung von Polen (24) der Akkumulatorzellen am leitenden Verbindungsmittel (4) vorzunehmen ist, insbesondere mittels Ultraschallverbinden und/oder Thermokompressionsverbinden und/oder Laserverbinden.

2. Vorrichtung nach Anspruch 1, **dadurch gekennzeichnet, dass** jeweils ein Zellträger (8) an einem oberen Endbereich (11) und einem unteren Endbereich (12) vorgesehen sind und jeweils zumindest ein leitende Verbindungsmittel (4) an dem Zellträger (8) abgestützt befestigt ist und/oder das leitende Verbindungsmittel (4) an dem Zellträger (8) an mehreren Verbindungspositionen (13) zu befestigen ist, insbesondere an Mittelstreben (14) des Zellträgers (8) und/oder die Batterieelemente durch Positionierungselemente (15) untereinander auf vorbestimmten Positionen im Zellträger (8) zu halten sind, wobei die Verbindungspositionen (13) am leitenden, plattenartigen Verbindungsmittel (4) an dem Zellträger insbesondere an Positionierungserhöhungen (16) zwischen Aufnahmevertiefungen (17) für Batterieelemente vorgesehen sind und/oder eine positionierende Abstützung, insbesondere Umgreifung (19) des leitenden Verbindungsmittel (4) an zumindest einem Randbereich (18) des Zellträgers vorgesehen ist und/oder das leitende Verbindungsmittel (4) an dem Zellträger mittels Verschraubung (20) und/oder Heißverstämmen (21) und/oder Klipverbindung (22) und/oder Blindniet (23) zu befestigen ist und/oder ein Pack (3) umfassend mehrere Akkumulatorzellen (5) umfassend Verbindungsmittel (4), als Gesamtheit ein Abstandsmittel, insbesondere außen oder im Inneren, insbesondere als Gehäusemittel, zum Abstandshalten zu einem weiteren oberen und/oder unteren Pack aufweist und/oder die Verbindungsmittel (4) gegen eine mechanische Belastung durch ein Sicherungsmittel gesichert sind.

3. Vorrichtung (1) nach Anspruch 1 oder 2, **dadurch gekennzeichnet, dass**
mindestens ein elektrisch leitendes Verbindungsmittel vorgesehen ist, insbesondere umfassend ein oder mehrere Verbindungsdrähte und/oder Verbindungsbänder und/oder Verbindungsplatten, das mittels eines Verbindungsverfahrens, insbesondere mittels Ultraschallbonden und/oder Thermokompressionsbonden und/oder Laserverbinden, zur leitenden Verbindung, zwischen zumindest zwei Bauelementen, insbesondere einer oder mehrerer Akkumulatorzellen (5) und/oder dem Batteriemanagementsystem zu verbinden ist,
mindestens einen Zellträger (8) zum Aufnehmen der Batterieelemente, insbesondere Akkumulatorzellen (5), und/oder des Batteriemanagementsystems,
wobei die Batterielemente insbesondere in Längsrichtung (6') nebeneinander in dem Zellträger (8) angeordnet eingerichtet sind, wobei die Batterieelemente zwischen einem Zellträger (8) in einem oberen Bereich (7') des Packs (3) und einem Zellträger in einem unteren Bereich (10') des Packs angeordnet sind, insbesondere zumindest angrenzend an einen unteren Randbereich (15') des Packs, wobei ein Beabstandungsmittel (11') zum Abstandshalten zu einem weiteren, in einem oberen Bereich (12') aufzusetzenden Zusatzelement (13'), insbesondere ein weiterer Pack (16'), vorgesehen ist, wodurch ein vorbestimmter Abstand (14') zwischen dem unteren Randbereich (15') des Packs und einem oberen Randbereich (17') des Packs einzurichten ist, wobei der Abstand (14') gleich oder grösser als eine größte Länge (18') eines Batterieelements, insbesondere Akkumultorzelle (5), in dem Zellträger (8) eingerichtet ist

4. Vorrichtung nach einem der Ansprüche 1 bis 3, **dadurch gekennzeichnet, dass** das Beabstandungsmittel (11') in einem Außenbereich (19') und/oder einem Innenbereich (20') des Packs vorgesehen ist und/oder das Beabstandungsmittel (11') als Gehäusemittel (21'), insbesondere als Gehäuseteilmittel, ausgebildet ist und/oder der durch das Beabstandungsmittel (11') erzeugte Abstand (14') gleich oder größer als eine Länge (18') eines Batterieelements und des Zellträgers und des darauf angeordneten Verbindungsmittels, sowie insbesondere weiterer Mittel für die mechanische Fixierung der Batterieelemente und/oder eine elektrische Kontaktierung und/oder ein Sensorikmittel und/oder die Batterielelemente zuerst zwischen den Zellträgern und anschließend in dem Gehäusemittel (21') als Beabstandungsmittel (11') anzuordnen sind und/oder der Zellträger mit den Batterieelementen gegen ein Verrutschen an dem Beabstandungsmittel gesichert ist und/oder Batterieelemente mit einem Zellverbindungsmittel leitend verbunden sind, wobei ein Verbindungsmittel (4) an dem Zellträger angebracht ist und anschließend die Batterieelemente mit dem Verbindungsmittel zu verbinden sind und/oder das Beabstandungsmittel (11') zugleich als Stabilisierungsmittel des Packs ausgebildet ist.

5. Verwendung einer Vorrichtung (1) nach einem der Ansprüche 1 bis 4, für Paks (3) umfassend Akkumulatorenzellen (5) für Leicht-Elektro Fahrzeuge (LEV), insbesondere Elektrofahrräder.

6. Verfahren zur Herstellung einer Vorrichtung (1) zum Halten von elektrisch leitend verbundenen Bauelementen (2) eines Packs (3) von Batterielementen, insbesondere Akkumulatorzellen (5), insbesondere Lithium-Ionen-Akkumulatoren, insbesondere für insbesondere für Powertoolgeräte und/oder Gartengeräte, die insbesondere mit einem Batteriemanagementsystem ausgestattet sind, nach Anspruch 1 bis 4, wobei die Vorrichtung zum Energiespeichern und/oder Energieabgeben vorgesehen ist, die mehrfach aufladbar ist,
umfassend mindestens einen Zellträger (8) zum Aufnehmen der Batterieelemente, insbesondere Akkumulatorzellen (5), und/oder des Batteriemanagementsystems,
wobei mindestens ein elektrisch leitendes Verbindungsmittel (4), insbesondere umfassend ein oder mehrere leitende Bandmittel und/oder Plattenmittel, mittels einer Verbindungskontaktierung, zur leitenden Verbindung zwischen zumindest zwei Bauelementen vorgesehen ist, insbesondere einer oder mehrerer Akkumulatorzellen (5) und/oder dem Batteriemanagementsystem,
wobei zunächst das leitende Verbindungsmittel (4) an dem Zellträger derart abgestützt befestigt wird, dass eine Biegefestigkeit des Verbindungsmittel (4) erreicht wird, wobei die Batterieelemente, insbesondere Akkumulatorzellen (5), unabhängig davon eingesetzt werden, insbesondere vorab und/oder anschließend, und eine anschließende Verbindungskontaktierung von Polen der Akkumulatorzellen am leitenden Verbindungsmittel (4) vorgenommen wird, insbesondere mittels Ultraschallverbinden und/oder Thermokompressionsverbinden und/oder Laserverbinden.

7. Verfahren nach Anspruch 6, **dadurch gekennzeichnet, dass** mindestens ein elektrisch leitendes Verbindungsmittel (4) umfasst wird, insbesondere umfassend ein oder mehrere Verbindungsdrähte und/oder Verbindungsbänder und/oder Verbindungsplatten, das mittels eines Verbindungsverfahrens, insbesondere mittels Ultraschallbonden und/oder Thermokompressionsbonden und/oder Laserverbinden, zur leitenden Verbindung, zwischen zumindest zwei Bauelementen, insbesondere einer oder mehrerer Akkumulatorzellen (5) und/oder dem Batteriemanagementsystem verbunden wird,
mindestens einen Zellträger (8) zum Aufnehmen der Batterieelemente, insbesondere Akkumulatorzellen (5), und/oder des Batteriemanagementsystems, wobei die Batterielemente insbesondere in Längsrichtung nebeneinander in dem Zellträger angeordnet eingerichtet wird,
wobei die Batterieelemente zwischen einem Zellträger in einem oberen Bereich des Packs und einem Zellträger in einem unteren Bereich des Packs angeordnet wird, insbesondere zumindest angrenzend an einen unteren Randbereich des Packs, wobei ein Beabstandungsmittel zum Abstandshalten zu einem weiteren, in einem oberen Bereich aufzusetzenen Zusatzelement, insbesondere ein weiterer Pack, vorgesehen ist, wodurch ein vorbestimmter Abstand zwischen dem unteren Randbereich des Packs und einem oberen Randbereich des Packs einzurichten ist, wobei der Abstand gleich oder grösser als eine größte Länge eines Batterieelements in dem Zellträger eingerichtet wird.
